# EUROPÄISCHE PATENTSCHRIFT

(11) **EP 1 767 297 B1**
(45) Veröffentlichungstag und Bekanntmachung des Hinweises auf die Patenterteilung: **09.01.2013**
(21) Anmeldenummer: 06405225.1
(22) Anmeldetag: 24.05.2006
(51) Int. Cl.: B23B 41/00, E21B 7/00, F02M 55/02

(54) **Tieflochbohrwerkzeug, Verfahren zum Bohren, sowie ein Werkstück hergestellt mit einem Tieflochbohrwerkzeug**
Deep-hole drill, drilling process and workpiece manufactured by means of such a deep-hole drill
Foret pour trous profonds, procédé de forage et pièce usiné par moyen d'un tel foret

(30) Priorität: 27.06.2005 EP 05405413
(43) Veröffentlichungstag der Anmeldung: 28.03.2007
(73) Patentinhaber: Wärtsilä Schweiz AG, 8401 Winterthur (CH)
(72) Erfinder: Yildirim, Turhan, 8408 Winterthur (CH); Wolfensberger, Albert, 8552 Felben-Wellhausen (CH)
(74) Vertreter: Sulzer Management AG

(56) Entgegenhaltungen:
- EP-A- 1 413 744
- DE-A1- 2 461 476
- DE-A1- 3 439 395

## Beschreibung

Die Erfindung betrifft Tieflochbohrwerkzeug, ein Verfahren zum Bohren sowie ein Werkstück, hergestellt mit einem efindungsgemässen Tieflochbohrwerkzeug nach einem erfindungsgemässen gemäss dem Oberbegriff des unabhängigen Anspruchs der jeweiligen Kategorie.

Das Einbringen von parallelen Bohrungen in ein Werkstück mit höchster Präzision ohne grossen technischen Aufwand, wie zum Beispiel die Verwendung von Lasergestützten Systemen oder anderen Hilfsmitteln, ist ein im Stand der Technik wohlbekanntes und vielfach ungelöstes Problem.

Besonders bei Parallelbohrungen, die sich schneiden, wie dies z.B. bei Brennstoffspeichern bzw. Druckspeichern von Common Rail Systemen von Verbrennungsmotoren der Fall sein kann, ist die zuverlässige Werkzugführung beim Bohren der Parallelbohrungen ein bisher nicht gelöstes Problem.

Die DE 34 39 395, die dem Oberbegriff der Ansprüche 1 und 9 entspricht, A1 offenbart ein Verfahren und eine Vorrichtung zum Herstellen sich überschneidender achsparalleler zylindrischer Bohrungen in Metallwerkstücken.

In der EP 1 413 744 sind Druckspeicher für ein Common Rail System für einen Grossdieselmotor, z.B. für einen Sulzer RTFlex Motor gezeigt, die einen Speicherraum für ein Druckmedium, z.B. für den Treibstoff zum Betreiben des Grossdieselmotors, aufweisen, der sich über die gesamte Länge des Druckspeichers von z.B. 10m erstreckt und zwei sich in Form einer Acht überschneidende Bohrungen aufweist, die jede für sich im Vergleich zur enormen Länge dieser Druckspeicher von z.B. 10m einen sehr kleinen Durchmesser von beispielsweise nur 50mm aufweisen.

Die Herstellung dieser Druckspeicher war bisher mit einem grossen Aufwand an Zeit und Material verbunden, da die Einbringung einer zu der ersten Bohrung parallelen zweiten Bohrung häufig misslang, so dass das Werkstück verloren war. Der Grund dafür ist, dass das Bohrwerkzeug über die sehr grosse Länge der Druckspeicher nicht sicher geführt werden konnte, so dass über die gesamte Länge betrachtet der Abstand der Bohrungen in unakzeptablen Grenzen variiert hat bzw. nicht konstant gehalten werden konnte und / oder die Achsen der beiden Bohrungen gegeneinander um einen nicht tolerierbar grossen Winkel gegeneinander verdreht waren.

Da diese Druckspeicher jedoch einer sehr grossen Belastung sicher standhalten müssen, im Inneren der Druckspeicher werden leicht Drücke von 2000bar und mehr erreicht und zudem treten im Betriebszustand der Brennkraftmaschine erhebliche dynamische Druckschwankungen auf, muss die Symmetrie der Bohrungen äusserst präzise gewährleistet sein, um Schäden am Druckspeicher zu vermeiden und dessen Betriebssicherheit garantieren zu können.

Die Aufgabe der Erfindung ist es daher, ein Tieflochbohrwerkzeug bereitzustellen, mit dem sich auf besonders einfache Weise zwei parallele Bohrungen in ein Werkstück mit höchster Präzision einbringen lassen. Eine weitere Aufgabe der Erfindung ist es ein Verfahren zur Verfügung zu stellen, mit welchem sich unter Verwendung des erfindungsgemässen Tieflochbohrwerkzeugs besonders einfach zwei oder mehr parallele Bohrungen mit höchster Präzision in ein Werkstück einbringen lasse.

Weiterhin ist es schliesslich eine Aufgabe der Erfindung ein Werkstück bereitszustellen, das mit einem Tieflochbohrwerkzeug gemäss der vorliegenden Erfindung unter Anwendung des erfindungsgemässen Verfahrens hergestellt wurde.

Die diese Aufgaben in apparativer und verfahrenstechnischer Hinsicht lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.

Die Erfindung betrifft somit ein Tieflochbohrwerkzeug, umfassend einen von einem Antrieb antreibbaren Bohrer mit einer Bohrstange und einem Bohrkopf zum Bohren einer Parallelbohrung in ein Werkstück entlang einer Bohrachse. Dabei ist zur Führung des Bohrers ein Führungswerkzeug vorgesehen, wobei das Führungswerkzeug derart ausgestaltet und am Bohrer angeordnet ist, dass das Führungswerkzeug in einer Hilfsbohrung, die sich entlang einer Hilfsbohrachse erstreckt, exzentrisch führbar ist, so dass die Parallelbohrung derart in das Werkstück einbringbar ist, dass sich die Bohrachse der Parallelbohrung im wesentlichen parallel zur Hilfsbohrachse erstreckt.

Wesentlich für die Erfindung ist, dass das Führungswerkzeug in Bezug auf die Bohrachse der einzubringenden Parallelbohrung exzentrisch in der Hilfsbohrung führbar ist. Dadurch, dass das Führungswerkzeug erfindungsgemäss am Bohrer derart angeordnet ist, dass das Führungswerkzeug in der Hilfsbohrung, die sich konzentrisch zu und entlang der Hilfsbohrachse erstreckt, exzentrisch führbar ist, ist der Bohrer beim Einbringen der Parallelbohrung so führbar, dass sich die Parallelbohrung bis auf tolerierbare Abweichungen parallel zur Hilfsbohrung bzw. zur Hilfsbohrachse erstreckt. Abgesehen von tolerierbaren kleinen Abweichungen ist somit der Abstand der beiden Bohrachsen auf die gesamte Länge der Bohrungen konstant und die Achsen der beiden Bohrungen sind auf die gesamte Länge höchstens um einen tolerierbar kleinen Winkel gegeneinander verdreht.

Somit ist es mit dem erfindingsgemässen Tieflochbohrwerkzeug erstmals möglich, auf besonders einfache Weise in ein Werkstück eine sehr tiefe, das heisst eine sehr lange Bohrung, nämlich die Parallelbohrung, mit höchster Präzision parallel zu einer bereits im Werkstück bestehenden Hilfsbohrung einzubringen.

Dabei ist im Rahmen dieser Anmeldung unter einer "tiefen Bohrung" bzw. unter einer "langen Bohrung" eine Bohrung in einem Werkstück zu verstehen, deren "Tiefe" oder "Länge" im Vergleich zur Länge des Bohrkopfs und / oder deren zu bohrende "Tiefe" oder "Länge" im Verhältnis zum Durchmessers der einzubringenden Parallelbohrung, deutlich grösser als eins ist.

Beispielsweise kann die Hilfsbohrung eine erste Bohrung in einem Druckspeicher eines Common Rail System für die Brennstoffeinspritzung eines Grossdieselmotors sein. Spezielle Druckspeicher dieser Art sind z.B. in der EP 1 413 744 gezeigt. Diese Druckspeicher haben typischerweise eine Länge von 6m bis 12m und die Bohrungen selbst können Durchmesser von z.B. 10mm bis 100mm, bevorzugt ca. 30mm bis 80mm haben, je nach Anforderungen der Brennkraftmaschine an den Druckspeicher des Common Rail Systems. Dabei sind, je nach Ausführungsform bevorzugt zwei parallele Bohrungen im Abstand von z.B. 10mm bis 50mm symmetrisch oder asymmetrisch zur Mittelachse des Druckspeichers vorgesehen, wobei im speziellen die beiden Bohrungen in Form einer Acht überlappen. Somit liegen bei diesem speziellen Beispiel Verhältnisse von Länge zu Durchmesser im Bereich von ca. 100 bis 1000 vor. Es versteht sich, dass die vorliegende Erfindung keinesfalls auf diese speziellen Geometrien beschränkt ist.

Vielmehr dienen die zuvor genannten Beispiele nur zur Veranschaulichung, was unter einer "tiefen" bzw. "langen" Bohrung zu verstehen ist. Selbstverständlich kann das Verhältnis von Länge der Bohrung zu deren Durchmesser im speziellen auch kleiner sein, also z.B. zwischen 10 und 100 oder weniger liegen oder die Bohrungen können ein noch grösseres Verhältnis von Länge zu Durchmesser haben. Auch brauchen die beiden oder mehreren parallel verlaufenden Bohrungen, also die mit dem erfindungsgemässen Tieflochbohrwerkzeug zu bohrende Parallelbohrung und die Hilfsbohrung nicht zwangsläufig denselben Durchmesser zu haben. Dabei können auch mehr als zwei sich überlappende Bohrungen mit gleichem oder verschiedenem Durchmesser vorgesehen sein, die jeweils parallel zueinander verlaufen. Auch wenn z.B. zu einer Hilfsbohrung zwei oder mehr Parallelbohrungen in eine Werkstück eingebracht werden, so können diese alle gleich oder auch verschiedenen Durchmesser aufweisen.

Dabei versteht es sich von selbst, auch wenn das erfindungsgemässe Tieflochbohrwerkzeug und das später noch zu erläuternde erfindungsgemässe Verfahren besonders vorteilhaft für die Herstellung von Druckspeichern für Common Rail Systeme von Brennkraftmaschinen, insbesondere für land- und seegestützte Grossdieselmotoren, z.B. zur Herstellung von Druckspeichern für Grossdieselmotoren vom Typ Sulzer RTA, Sulzer RT Flex oder für Grossdieselmotoren vom Typ MC bzw. MC-C von MAN/B&W oder anderen Grossdieselmotoren geeignet ist, dass das erfindungsgemässe Tieflochbohrwerkzeug überall erfolgreich eingesetzt werden kann, wo im Sinne dieser Anmeldung tiefe Bohrungen mit höchster Präzision parallel in ein Werkstück eingebracht werden müssen. Dabei braucht das Werkstück auch nicht aus Metall zu sein, wie im oben diskutierten Beispiel eines Druckspeichers. Das erfindungsgemässe Tieflochbohrwerkzeug kann bei der Bearbeitung eines jeden beliebigen Materials erfolgreich eingesetzt werden. So können in sehr weiche und sehr harte Werkstücke gleichermassen erfolgreich parallele Bohrungen mit höchster Präzision eingebracht werden. Das Werkstück kann aus Metall, Holz, Kunststoff oder aus jedem anderen Material sein, in das zwei parallele Bohrungen eingebracht werden können.

Wenn im Rahmen dieser Anmeldung die Aussage getroffen wird, dass zwei Bohrungen, z.B. die Hilfsbohrung und die Parallelbohrung, parallel oder im wesentlichen parallel sind, so bedeutet das, dass die jeweiligen Bohrachsen, um die sich die Bohrungen konzentrisch erstrecken, also zum Beispiel die Hilfsbohrachse und die Bohrachse der Parallelbohrung, im Rahmen einer kleinen tolerierbaren Abweichung über die gesamte Länge der Bohrungen in einem konstantem Abstand zueinander verlaufen und die jeweiligen Bohrachsen höchstens um einen tolerierbaren Wert eines Winkels gegeneinander verdreht sind.

Wie gross in absoluten Zahlen eine tolerierbare Abweichung im Abstand bzw. im Winkel einer Verdrehung von zwei Bohrachsen gegeneinander im speziellen Fall ist, weiss der Fachmann, wenn er ein bestimmtes Werkstück zu einem bestimmten Zweck mit zwei oder mehr parallelen Bohrungen versehen will. So sollte z.B. bei einem Druckspeicher eines Common Rail Systems für die Brennstoffeinspritzung eines Grossdieselmotors in einem Schiff die Abweichung im Abstand von zwei in Form einer Acht überlappenden Bohrungen über die gesamte Länge, die z.B. 6m bis 12m betragen kann, nicht mehr als 2mm bis 8mm, im Speziellen nicht mehr als 4mm sein und die Verdrehung der Hilfsbohrachse gegen die Bohrachse der Parallelbohrung nicht mehr als ca. 2° bis 12°, im speziellen nicht mehr als 6.7° betragen.

Es versteht sich, dass die zuvor genannten Zahlenwerte nur beispielhaft für spezielle Druckspeicher von Common Rail Systemen für Grossdieselmotoren zu verstehen sind. Bei anderen Werkstücken oder z.B. bei einem Druckspeicher für ein Common Rail System für eine andere Anwendung, z.B. für Wasser oder Hydrauliköl, oder einem Common Rail System für die Brennstoffeinspritzung in einem Kleinmotor, z.B. für einen Personenkraftwagen, können die gerade noch tolerierbaren Grenzen für die Winkelabweichung in der Verdrehung der Bohrachsen gegeneinander bzw. für die Abweichung im Abstand, auch andere Werte haben. Massgebend ist nur, dass für die spezielle Anwendung die Abweichungen aufgrund technischer Erfordernisse tolerierbar klein sind.

In einem für die Praxis besonders wichtigen Ausführungsbeispiel umfasst das Führungswerkzeug ein Verbindungssegment zur Verbindung des Führungswerkzeugs mit dem Bohrer und ein Führungssegment mit einer Extenterachse zur exzentrischen Führung entlang der Hilfsbohrachse in der Hilfsbohrung. Bevorzugt sind dabei das Verbindungssegment und das Führungssegment drehfest in einem festen Abstand miteinander verbunden, so dass der Bohrer zur Bohrung der Parallelbohrung in einem festen Abstand führbar ist, wobei gleichzeitig eine Verdrehung der Bohrachse der Parallelbohrung gegen die Hilfsbohrachse der Hilfsbohrung im wesentlichen vermeidbar ist.

Vorteilhaft weist das Verbindungssegment eine Durchführung, insbesondere eine zylindrische-Durchführung zur Aufnahme der Bohrstange auf, so dass die Bohrstange in der Durchführung drehbar um eine Bohrerachse der Bohrstange lagerbar ist.

Im speziellen ist das Führungssegment derart ausgestaltet, dass sich im Betriebszustand die Exzenterachse des Führungselements parallel zur Hilfsbohrachse in einem vorgegebenen Abstand erstreckt. Dadurch, dass die Exzenterachse nicht mit der Hilfsbohrachse zusammenfällt, wird die Stabilität des erfindungsgemässen Tieflochbohrwerkzeug weiter verbessert. Das heisst, die Verdrehung der Bohrachse der Parallelbohrung gegen die Hilfsbohrachse wird weiter minimiert, so dass eine Parallelität von höchster Präzision erreichbar ist.

Eine Minimierung in der Abweichung von der Parallelität von Bohrachse und Hilfsbohrachse ist zusätzlich dadurch erreichbar, dass das Führungssegment eine Erweiterung in Form eines Führungsabschnitts aufweist, der sich in axialer Richtung über eine Endfläche des Verbindungssegment hinaus erstreckt. Dadurch wird die Auflagefläche des Führungssegments in der Hilfsbohrachse erhöht, so dass eine noch stabilere Seitenführung des Tieflochbohrwerkzeugs erreichbar ist.

Bevorzugt weist das Führungssegment und / oder der Führungsabschnitt senkrecht zur Exzenterachse eine nierenförmige Querschnittsfläche auf. dadurch liegt das Führungssegment und / oder der Führungsabschnitt nicht mit seiner gesamten Mantelfläche an der Wandung der Hilfsbohrung an, sondern im wesentlichen nur an drei sehr schmalen, in Richtung der Exzenterachse sich erstreckenden Auflageflächen des Führungssegment und / oder des Führungsabschnitts. Dadurch werden die zum Teil erheblichen Reibungskräfte zwischen Führungssegment und / oder dem Führungsabschnitt mit der Wandung der Hilfsbohrung deutlich reduziert, wodurch sich das Tieflochbohrwerkzeug besser führen lässt und der Bohrvorgang erleichtert wird.

In einem anderen besonders vorteilhaften Ausführungsbeispiel ist das Führungswerkzeug derart ausgestaltet und am Bohrer angeordnet, dass das Führungswerkzeug in der Hilfsbohrung und in der Parallelbohrung geführt ist. D.h., das Führungswerkzeug ist gleichzeitig in der Hilfsbohrung und in einem bereits neu gebohrten Abschnitt der Parallelbohrung gleichzeitig abgestützt. Durch dies Massnahme wird die Seitenführung des Tieflochbohrwerkzeugs nochmals deutlich verbessert, so dass die Abweichungen von der Parallelität noch weiter reduzierbar sind.

Insbesondere in Fällen, in denen die Präzision der Führung des Tieflochbohrwerkzeugs äusserste Anforderungen gestellt sind, kann in der Hilfsbohrung zur Führung des Führungswerkzeugs zusätzlich ein Führungselement, insbesondere eine Führungsstange vorgesehen sein. Das Führungselement, also z.B. die Führungsstange kann durch die gesamte Hilfsbohrung reichen, so dass das Führungselement z.B. ausserhalb der Hilfsbohrung, jeweils an den beiden Enden der Hilfsbohrung am Werkstück fixiert ist. Das Führungselement ist dann zur Führung des Tieflochbohrwerkzeugs einerseits wie oben beschrieben am Bohrer gefestigt und ist andererseits, so am Führungselement angeordnet, dass es sich entlang der Exzenterachse am Führungselement frei verschieben lässt, aber bezüglich des senkrechten Abstandes zum Führungselement starr angeordnet ist, so dass eine Parallelbohrung von höchster Präzision bezüglich der Parallelität in Bezug auf die Hilfsbohrung in das Werkstück einbringbar ist.

Die Erfindung betrifft weiter ein Verfahren zum Bohren mit einem Tieflochbohrwerkzeug, umfassend einen von einem Antrieb angetriebenen Bohrer mit einer Bohrstange und einem Bohrkopf, wobei in einem ersten Verfahrensschritt mit dem Bohrer eine Hilfsbohrung konzentrisch zu und entlang einer Hilfsbohrachse in ein Werkstück eingebracht wird. In einem zweiten Verfahrensschritt wird zum konzentrischen Bohren einer Parallelbohrung in das Werkstück entlang einer Bohrachse und zur Führung des Bohrers ein Führungswerkzeug vorgesehen, wobei das Führungswerkzeug derart ausgestaltet und am Bohrer angeordnet wird, dass das Führungswerkzeug in der Hilfsbohrung entlang der Hilfsbohrachse exzentrisch geführt wird, so dass die Parallelbohrung derart in das Werkstück eingebracht wird, dass sich die Bohrachse der Parallelbohrung im wesentlichen parallel zur Hilfsbohrachse erstreckt.

Das heisst, erfindungsgemäss wird in an sich bekannter Weise eine erste Bohrung in das Werkstück eingebracht, die dann als Hilfsbohrung verwendet wird. Zum Bohren der Parallelbohrung wird dann das Führungswerkzeug benutzt. In der schon vorhandenen Hilfsbohrung wird das Werkzeug, durch die exzentrische Verlagerung der Drehachsen, den Bohrkopf des Bohrers zum einen parallel zur Hilfsbohrachse in einem vorgegebenen festen Abstand führen und auch eine Verdrehung bzw. Verkippung der Parallelbohrung gegen die Hilfsbohrung verhindern.

In einer für die Praxis besonders wichtigen Variante wird die Parallelbohrung derart in das Werkstück eingebracht, dass eine Querschnittsfläche der Parallelbohrung teilweise mit einer Querschnittsfläche der Hilfsbohrung überschneidet. Das heisst, es entsteht im Werkstück in Richtung der Hilfsbohrachse bzw. der Bohrachse der Parallelbohrung ein einziger zusammenhängender Raum mit einer bestimmten Querschnittsgeometrie, der durch die überschneidenden Bohrungen erzeugt wird.

Bei einem weiteren Ausführungsbeispiel des erfindungsgemässen Verfahrens ist, wie weiter oben bereits beschrieben, zusätzlich ein Führungselement, z.B. eine Führungsstange vorgesehen. Das Führungselement, also z.B. die Führungsstange wird in der Hilfsbohrung, die nach einem an sich bekannten Verfahren gebohrt wurde, plaziert und an den beiden Enden des Werkstücks fixiert. In einem speziellen Ausführungsbeispiel dieses Verfahrens wird die Parallelbohrung zunächst mit einem kleineren Durchmesser, aber mit einer ausreichenden Überschneidung mit der Hilfsbohrung ausgeführt. Dadurch erhält man eine Parallelbohrung mit kleinerem Durchmesser, die in höchstem Masse Parallel zur Hilfsbohrung ist. In einem zweiten Schritt wird zunächst das Führungselement aus der Hilfsbohrung entfernt und sodann wird unter Verwendung eines anderen Führungselements, das einerseits wie oben dargelegt am Bohrer befestigt wird und sich andererseits entweder nur in der Hilfsbohrung oder in der Hilfsbohrung und zusätzlich in einem bereits vorgebohrten Bereich abstützt, die Parallelbohrung auf den gewünschten Durchmesser aufgebohrt.

Selbstverständlich kann der weitere Schritt bei dem zuvor beschriebenen Verfahren auch fehlen, wenn die Parallelbohrung z.B. mit dem kleineren Durchmesser gewünscht wird, oder wenn die Parallelbohrung bereits im ersten Schritt mit einem grösseren gewünschten Durchmesser gebohrt wird.

Insbesondere dann, wenn das Führungswerkzeug sowohl in der Hilfsbohrung, als auch in der Parallelbohrung abgestützt werden soll, empfiehlt sich zur Bohrung der Parallelbohrung die folgende Variante des erfindungsgemässen Verfahrens: Zunächst wird in an sich bekannter Weise die Hilfsbohrung in das Werkstück eingebracht. Das kann z.B. mit einem an sich bekannten Bohrer oder einer Drehbank bewerkstelligt werden. Sodann wird ein erster Abschnitt der Parallelbohrung über eine relativ kurze Distanz, z.B. bis zu einer Tiefe von 150mm im Falle eines Druckspeichers für ein Common Rail System für einen Grossdieselmotor, in das Werkstück eingebracht. Die Tiefe des ersten relativ kurzen Abschnitts der Parallelbohrung muss in jedem Fall so gewählt werden, dass das Führungswerkzeug am Bohrer des erfindungsgemässen Tieflochbohrwerkzeugs so angeordnet werden kann, dass es sicher in der Parallelbohrung in Bohrrichtung hinter dem Bohrkopf und in der Hilfsbohrung gleichzeitig abgestützt werden kann. Dadurch kann eine äusserste Präzision in der Parallelität von Parallelbohrung und Hilfsbohrung erreicht werden.

Es versteht sich, dass ein Durchmesser der Parallelbohrung in einem dritten Verfahrensschritt in einem weiteren Bohrvorgang vergrössert werden kann, ganz gleich welche Anordnung des Führungswerkzeugs gewählt wird. Das heisst, eine Vergrösserung des Durchmessers der Parallelbohrung in einem weiteren Verfahrensschritt kann selbstverständlich auch dann vorteilhaft vorgenommen werden, wenn kein Führungselement, wie zum Beispiel eine Führungsstange verwendet wird.

Es ist weiterhin klar, dass, falls erforderlich, mehr als eine Parallelbohrung in das Werkstück eingebracht werden kann. Solche Geometrien sind ebenfalls aus der EP 1 413 744 bereits bekannt und erhöhen im Fall eines Druckspeichers z.B. die Flexibilität in Bezug auf die Möglichkeiten des Anschlusses von Abnehmern erheblich.

Ferner betrifft die Erfindung ein Werkstück mit einer Hilfsbohrung und einer Parallelbohrung, hergestellt mit einem erfindungsgemässen Tieflochbohrwerkzeug nach einem Verfahren gemäss der vorliegenden Erfindung.

In einem bevorzugten Ausführungsbeispiel überschneidet dabei die Querschnittsfläche der Parallelbohrung teilweise mit der Querschnittsfläche der Hilfsbohrung, insbesondere überschneiden die beiden Querschnittflächen in Form einer Acht.

In einem speziellen Ausführungsbeispiel eines erfindungsgemässen Werkstücks weist das Werkstück mehr als eine Parallelbohrung auf.

In einem für die Praxis besonders wichtigen Fall ist das Werkstück eine Druckleitung für ein unter einem Druck stehendes Fluid, insbesondere ein Druckspeicher für ein Common Rail System einer Brennkraftmaschine, im speziellen ein Common Rail System für die Brennstoffeinspritzung eines Grossdieselmotors. Dabei kann der Grossdieselmotor z.B. ein Grossdieselmotor für ein Schiff oder z.B. ein landgestützter Grossdieselmotor zur Herstellung elektrischer Energie sein.

Die Erfindung wird an Hand der schematischen Zeichnung im folgenden näher erläutert. Es zeigen:
- Fig. 1: ein einseitig geführtes Tieflochbohrwerkzeug;
- Fig. 2a: ein Führungswerkzeug in perspektivischer Darstellung;
- Fig. 2b: das Führungswerkzeug der Fig. 2a im Längsschnitt entlang der Achse I-I;
- Fig. 2c: das Führungswerkzeug der Fig. 2a im Schnitt senkrecht zur Achse I-I;
- Fig. 3: ein beidseitig abgestütztes Tieflochbohrwerkzeug;
- Fig. 4a: ein an einer Führungsstange abgestütztes Tieflochbohrwerkzeug;
- Fig. 4b: Querschnitt durch ein Führungswerkzeug zur Führung an einer Führungsstange;
- Fig. 5: ein Ausführungsbeispiel eines erfindungsgemässen Druckspeichers für ein Common Rail System;
- Fig. 6: ein zweites Ausführungsbeispiel gemäss Fig. 5.

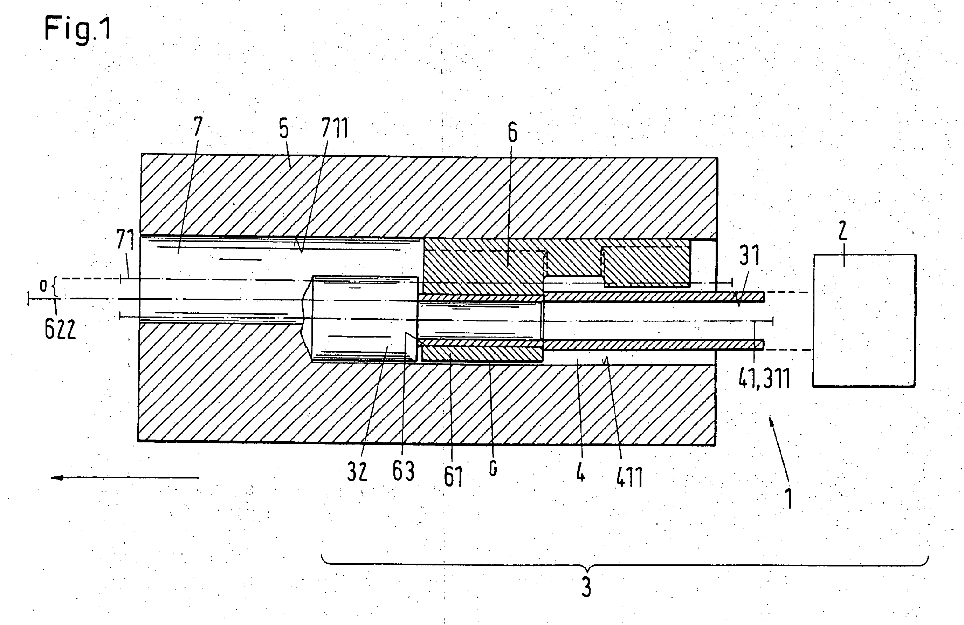

In Fig. 1 ist in einer schematischen Darstellung ein einseitig geführtes erfindungsgemässes Tieflochbohrwerkzeug dargestellt, das im folgenden gesamthaft mit dem Bezugszeichen 1 bezeichnet wird.

Die Figur 1 zeigt ein Werkstück 5, das im vorliegenden Beispiel ein Druckspeicher 5 für ein Common Rail System für die Brennstoffversorgung eines Grossdieselmotors ist. im dargestellten Beispiel ist eine Hilfsbohrung 7 entlang und konzentrisch zu der Hilfsbohrachse 71 in an sich bekannter Weise bereits eingebracht worden und das Bohren der Parallelbohrung 4 entlang der Bohrachse 41 ist im Gange und noch nicht abgeschlossen. Das dargestellte erfindungsgemässe Tieflochbohrwerkzeug 1 umfasst einen von einem Antrieb 2 antreibbaren Bohrer 3 mit Bohrstange 31 und Bohrkopf 32 zum konzentrischen Bohren der Parallelbohrung 4. Die Bohrachse 41 der Parallelbohrung 4 und die Bohrerachse 311 des Bohrers 3 sind im wesentlichen identisch. Der Bohrrichtung verläuft darstellungsgemäss von rechts nach links und ist durch den Pfeil symbolisiert. Das Führungswerkzeug 6 zum parallelen Führen des Bohrers 3 weist ein Verbindungssegment 61 mit einer zylindrischen Durchführung 63 auf, in welcher die Bohrstange 31 drehbar um die Bohrachse 311 zur Führung des Bohrers 3 gelagert ist. Zum Anbringen des Führungswerkzeugs 6 am Bohrer 3 ist die Bohrstange zum Beispiel teilbar ausgestaltet. So kann die Bohrstange an geeigneten Stellen eine Verschraubung aufweisen, so dass zum Anbringen des Führungswerkzeuges 6 die Bohrstange 31 an der Verschraubung aufgetrennt werden kann. Im vorliegenden Beispiel ist das Führungswerkzeug 6 nur an einer Wandung 711 der Hilfsbohrung 7 und nicht an einer Wand 411 der Parallelbohrung 4 abgestützt. Das ist deutlich daran zu erkennen, dass zwischen dem Verbindungssegment 61 und der Wand 411 der Parallelbohrung 4 eine kleine Lücke G vorhanden ist. Somit ist das Tieflochbohrwerkzeug 1 an der Wand 411 der Parallelbohrung 4 nur über den Bohrkopf 32 abgestützt.

Zum Abtransport von aufgebohrtem Material des Werkstücks 5 kann der Bohrer 3, also der Bohrkopf 32 und die Bohrstange 31 hohl ausgeführt sein, und entsprechende, hier nicht dargestellte, an sich bekannte Mittel am Bohrer vorgesehen sein, die den Abtransport des ausgebohrten Materials unterstützen. Im vorliegenden Beispiel der Fig. 1 ist die Exzenterachse 622, die im wesentlichen die Drehachse des Führungswerkzeugs 6 definiert, um eine Länge a von der Hilfsbohrachse 71 beabstandet, so dass das Führungswerkzeug 6 während des Bohrens der Parallelbohrung 4 den Bohrer 3 bis auf eine vorgebbare tolerierbare kleine Abweichung parallel zur Hilfsbohrung 7 führt.

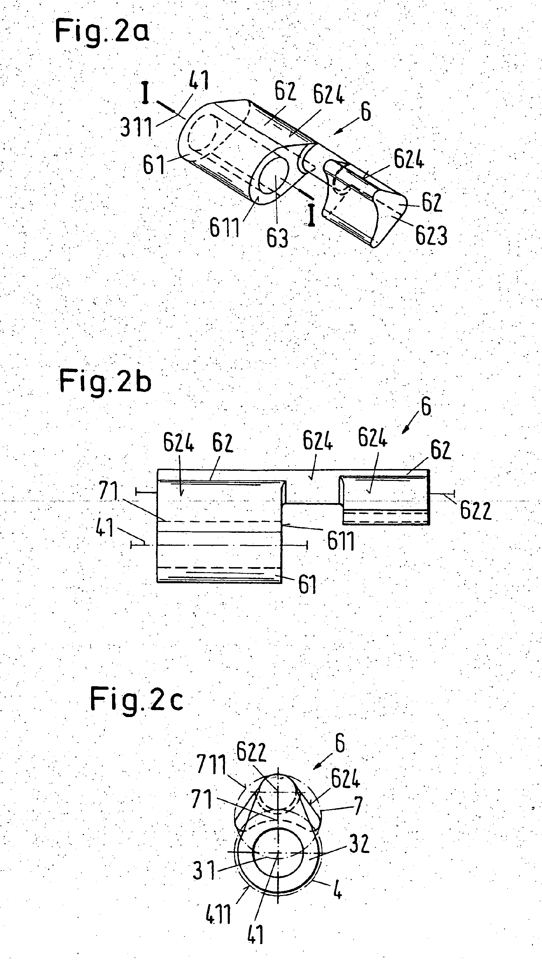

Die Figuren 2a bis 2c zeigen in verschiedenen schematischen Darstellungen ein und dasselbe spezielle Ausführungsbeispiel eines erfindungsgemässen Führungswerkzeugs 6.

Fig. 2a zeigt ein solches Führungswerkzeug zunächst in perspektivischer Darstellung. Das Führungswerkzeug umfasst ein Verbindungssegment 61 zur Verbindung des Führungswerkzeugs 6 mit dem Bohrer 3, wobei das Verbindungssegment 61 eine zylindrische Durchführung 63 zur Aufnahme einer nicht dargestellten Bohrstange 31 umfasst, so dass die Bohrstange 31 in der Durchführung 63 drehbar um die Bohrerachse 311 der Bohrstange 31 lagerbar ist. Die Bohrerachse 311 stimmt dabei während des Bohrens der Parallelbohrung 4 im wesentlichen mit der Bohrachse 41 der Parallelbohrung 4 überein. Das Führungswerkzeug 6 umfasst weiter ein Führungsegment 62, das sich entlang einer Exzenterachse 622 zur exzentrischen Führung entlang der Hilfsbohrachse 71 in der Hilfsbohrung 7 erstreckt. Bei dem in den Fig. 2a - 2c dargestellten speziellen Ausführungsbeispiel eines Führungswerkzeugs 6 umfasst das Führungssegment eine Erweiterung in Form eines Führungsabschnitts 623, der sich in axialer Richtung über eine nierenförmige Endfläche 611 hinaus erstreckt. Durch den zusätzlichen Führungsabschnitt 623 wird die Führung und Abstützung in der Hilfsbohrung 7 während des Bohrens der Parallelbohrung 4 deutlich verbessert. Durch die nierenförmige Ausgestaltung der Endfläche 611 wird erreicht, dass sich im Betriebszustand das Führungswerkzeug 6 nur über sehr schmale, in Richtung der Exzenterachse 622 verlaufende Berührungsbereiche an der hier nicht dargestellten Wandung 711 abstützt und nicht über die gesamte Aussenfläche 624 des Führungssegments 62.

In einem anderen einfacheren Ausführungsbeispiel kann die Erweiterung in Form des Führungsabschnitts 623 auch fehlen, so dass die Führung und Abstützung in der Hilfsbohrung 7 durch das Führungssegment 62 alleine bewerkstelligt wird.

In den Fig. 2b und Fig. 2c ist das Führungswerkzeug 6 zum besseren Verständnis einmal im Längsschnitt entlang der Linie I ― I (Fig. 2b) und im Querschnitt, senkrecht zur Linie 1 - I (Fig. 2c) dargestellt.

Man erkennt insbesondere die exzentrische Lage der Exzenterachse 622 in Bezug auf die Hilfsbohrachse 71 und die Bohrachse 41 der Parallelbohrung 4, wodurch die sehr genaue parallele Führung des Bohrers 3 in Bezug auf die Hilfsbohrung 7 beim Bohren der Parallelbohrung 4 erreichbar ist. Insbesondere in Fig. 2c ist sehr gut zu erkennen, dass durch die nierenförmige Ausgestaltung der Querschnittsfläche des Führungsabschnitts 623 und des Führungsegements 62 selbst, das Führungswerkzeug 6 zwar richtungsstabil über drei Auflagelinien in der Hilfsbohrung 7 abgestützbar ist, jedoch nicht über die gesamte Aussenfläche 624 an der Wandung 711 der Hilfsbohrung 7 abgestützt wird, wodurch im Betriebszustand des Bohrens die Reibung zwischen Führungswerkzeug 6 und der Wandung 711 der Hilfsbohrung 7 massiv reduziert und die Führung des Bohrers 3 deutlich erleichtert und verbessert wird. Selbstverständlich kann die Querschnittsfläche auch anders als nierenförmig sein und in Fällen, in denen die Reibung eine untergeordnete Rolle spielt, auch einen kreisförmigen Querschnitt haben.

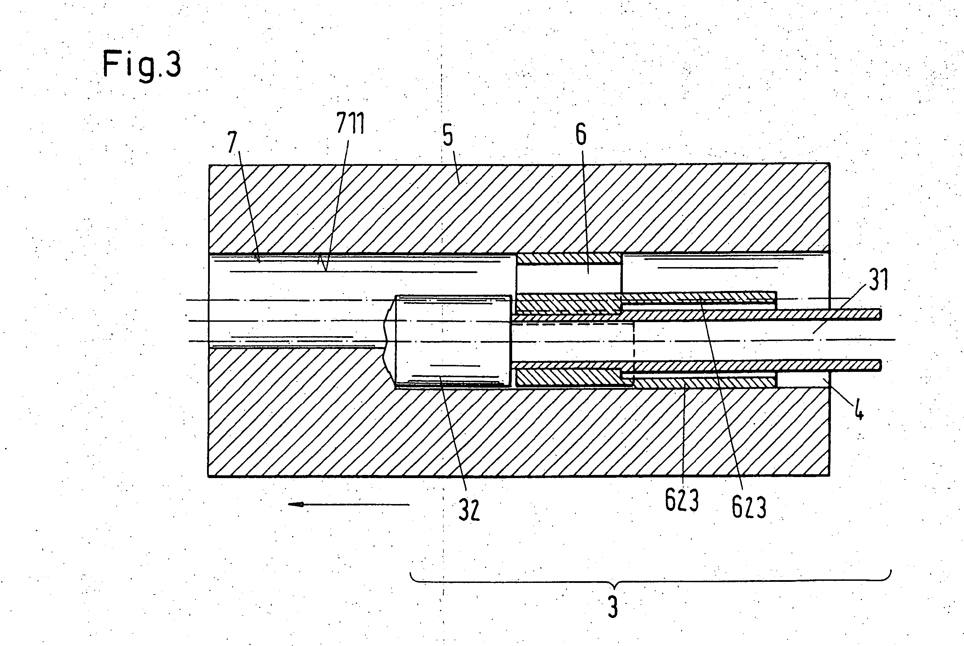

In Fig. 3 ist eine weiteres Ausführungsbeispiel eines erfindungsgemässen Tieflochbohrwerkzeugs 1 in Form eines beidseitig abgestützten Tieflochbohrwerkzeug 1 dargestellt. Bei dem in Fig. 3 dargestellten Ausführungsbeispiel, ist der Führungsabschnitt 623 des Führungssegments 62 derart ausgestaltet und angeordnet, dass der Führungsabschnitt 623 in Bezug auf die Bohrrichtung, die durch den Pfeil in Fig. 3 symbolisiert wird, dargestellungsgemäss rechts hinter dem Bohrkopf 32 an der Bohrstange 31 angeordnet ist, so dass das Führungswerkzeug 6 nicht nur an der Wandung 711 der Hilfsbohrung 7 abstützbar ist, sondern zusätzlich noch an der Wand 411 der Parallelbohrung 4, wodurch die Stabilität der Führung des Bohrers 3 im Betriebszustand deutlich verbessert wird.

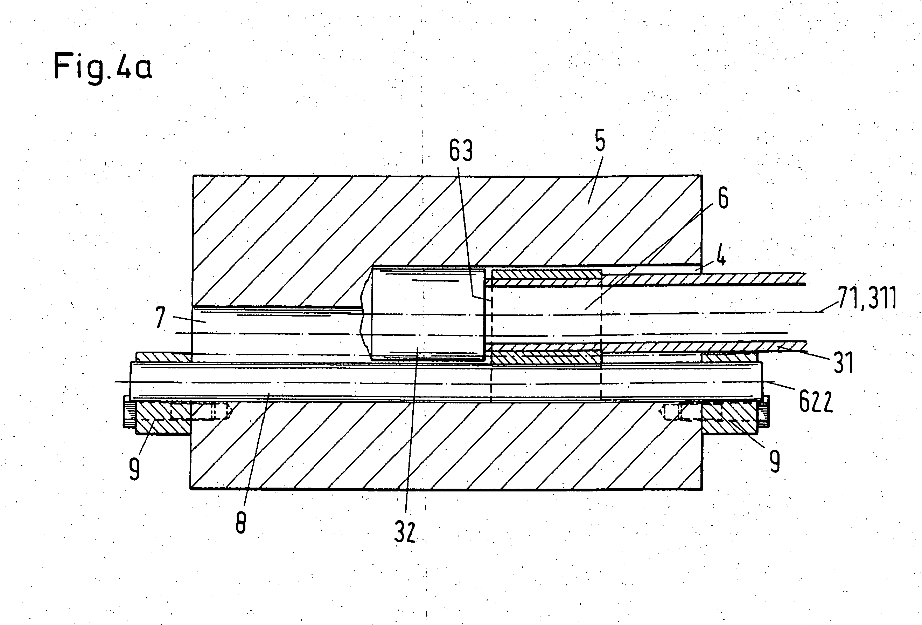

Die Fig. 4a zeigt ein weiteres Ausführungsbeispiel eines erfindungsgemässen Tieflochbohrwerkzeugs 1, wobei das Tieflochbohrwerkzeug 1 an einer Führungsstange 8 abgestützt ist.

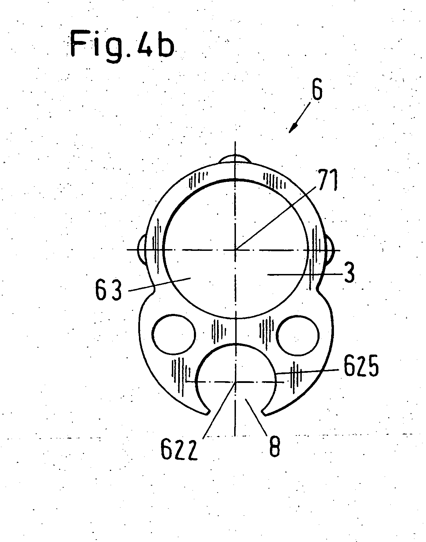

Das Führungselement 8, in Form der Führungsstange 8, ist in der Hilfsbohrung 7, die zunächst nach einem an sich bekannten Verfahren gebohrt wurde, plaziert und an den beiden Enden des Werkstücks 5 an eigens dafür vorgesehen Haltemitteln 9 fixiert. Bei Verwendung des in den Fig.4a und Fig.4b dargestellten Führungswerkzeugs 6 wird das Führungswerkzeug 6 am Bohrer 3 in einer zylindrischen Durchführung 63 montiert und entlang der Exzenterachse 622, die im Beispiel der Figuren 4 identisch ist mit der Längsachse der Führungsstange 8, in einer Halteklaue 625 an der Führungsstange 8 geführt.

Die Verwendung einer Führungsstange 8 ist dabei immer dann besonders vorteilhaft, wenn für das Bohren schwierige Bedingungen vorliegen und / oder sehr Lange Löcher in ein sehr hartes Material mit grösster Präzision gebohrt werden müssen.

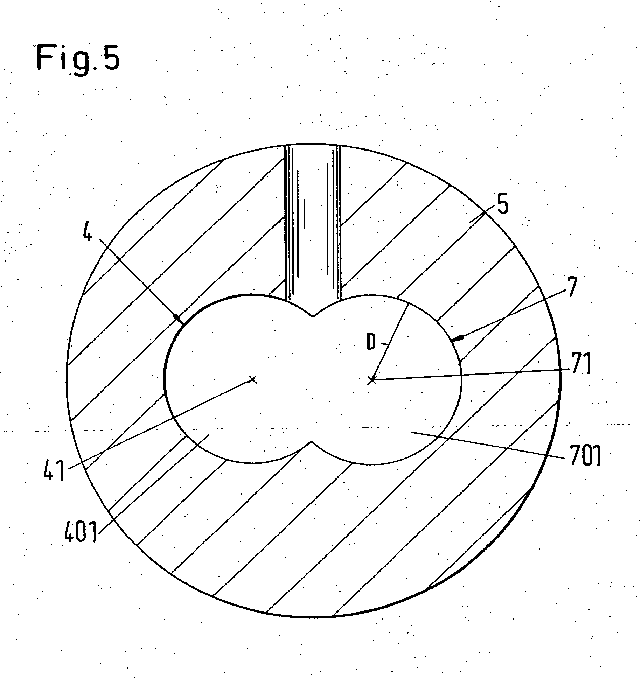

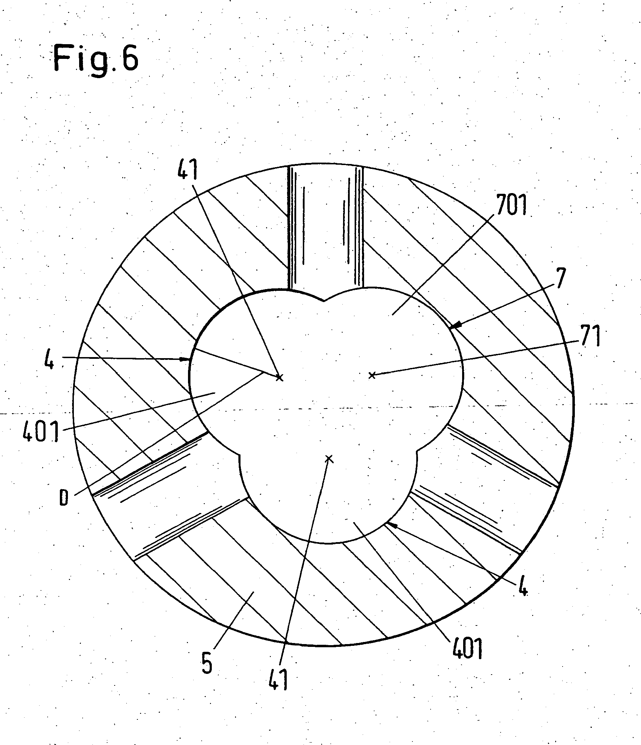

Die Fig. 5 und Fig. 6 zeigen schliesslich je ein Ausführungsbeispiel eines erfindungsgemässen Druckspeichers für ein Common Rail System für die Kraftstoffversorgung eines Grossdieselmotors eines Schiffes. Die hier dargestellte Hilfsbohrung 7 und die entsprechenden Parallelbohrungen 4 sind mit einem erfindungsgemässen Tieflochbohrwerkzeug 1 und unter Verwendung eines erfindungsgemässen Verfahrens gebohrt worden. Die in den Fig. 5 und Fig. 6 dargestellten Druckspeicher 5 sind z.B. zwischen 6m und 12m lang, so dass auch die Bohrungen selbst die entsprechende Tiefe haben. Der Durchmesser D der Bohrungen ist dabei z.B. 4mm. Durch den Einsatz des erfindungsgemässen Tieflochbohrwerkzeugs 1 ist die Verdrehung der Hilfsbohrachse 71 gegenüber der Bohrasche 41 der Parallelbohrung in beiden gezeigten Beispielen kleiner als 6.7° und der Abstand der Hilfsbohrachse 71 von der Bohrasche 41 beträgt über die gesamte Länge des Druckspeichers 5 weniger als 4 mm.

## Patentansprüche

1. Tieflochbohrwerkzeug, umfassend einen von einem Antrieb (2) antreibbaren Bohrer (3) mit einer Bohrstange (31) und einem Bohrkopf (32) zum Bohren einer Parallelbohrung (4) in ein Werkstück (5) entlang einer Bohrachse (41), wobei zur Führung des Bohrers (3) ein Führungswerkzeug (6) vorgesehen ist, **dadurch gekennzeichnet, dass** das Führungswerkzeug (6) derart ausgestaltet und am Bohrer (3) angeordnet ist, dass das Führungswerkzeug (6) in einer Hilfsbohrung (7), die sich entlang einer Hilfsbohrachse (71) erstreckt, exzentrisch in Bezug auf die Hilfsbohrachse geführt ist, so dass die Parallelbohrung (4) derart in das Werkstück (5) einbringbar ist, dass sich die Bohrachse (41) der Parallelbohrung (4) im wesentlichen parallel zur Hilfsbohrachse (71) erstreckt.

2. Tieflochbohrwerkzeug nach Anspruch 1, wobei das Führungswerkzeug (6) ein Verbindungssegment (61) zur Verbindung des Führungswerkzeugs (6) mit dem Bohrer (3) und ein Führungssegment (62) mit einer Extenterachse (622) zur exzentrischen Führung entlang der Hilfsbohrachse (71) in der Hilfsbohrung (7) umfasst.

3. Tieflochbohrwerkzeug nach Anspruch 2, wobei das Verbindungssegment (61) eine Durchführung (63), insbesondere eine zylindrische Durchführung (63) zur Aufnahme der Bohrstange (31) umfasst, so dass die Bohrstange (31) in der Durchführung (63) drehbar um eine Bohrerachse (311) der Bohrstange (31) lagerbar ist.

4. Tieflochbohrwerkzeug nach Anspruch 2 oder 3, wobei das Führungssegment (62) derart ausgestaltet ist, dass sich im Betriebszustand die Exzenterachse (622) des Führungselements (62) parallel zur Hilfsbohrachse (71) in einem vorgegebenen Abstand (a) erstreckt.

5. Tieflochbohrwerkzeug nach einem der Ansprüche 2 bis 4, wobei das Führungssegment (62) eine Erweiterung in Form eines Führungsabschnitts (623) aufweist, der sich in axialer Richtung über eine Endfläche (611) des Verbindungssegment (61) hinaus erstreckt.

6. Tieflochbohrwerkzeug nach einem der Ansprüche 2 bis 5, wobei das Führungssegment (62) und / oder der Führungsabschnitt (623) senkrecht zur Exzenterachse (622) eine nierenförmige Querschnittsfläche aufweist.

7. Tieflochbohrwerkzeug nach einem der vorangehenden Ansprüche, wobei das Führungswerkzeug (6) derart ausgestaltet und am Bohrer (3) angeordnet ist, dass das Führungswerkzeug (6) in der Hilfsbohrung (7) und in der Parallelbohrung (4) geführt ist.

8. Tieflochbohrwerkzeug nach einem der vorangehenden Ansprüche, wobei in der Hilfsbohrung (7) zur Führung des Führungswerkzeugs (6) ein Führungselement (8), insbesondere eine Führungsstange (8) vorgesehen ist.

9. Verfahren zum Bohren mit einem Tieflochbohrwerkzeug (1), umfassend einen von einem Antrieb (2) angetriebenen Bohrer (3) mit einer Bohrstange (31) und einem Bohrkopf (32), wobei in einem ersten Verfahrensschritt mit dem Bohrer (3) eine Hilfsbohrung (7) konzentrisch zu und entlang einer Hilfsbohrachse (71) in ein Werkstück (5) eingebracht wird, und in einem zweiten Verfahrensschritt zum konzentrischen Bohren einer Parallelbohrung (4) in das Werkstück (5) entlang einer Bohrachse (41) und zur Führung des Bohrers (3) ein Führungswerkzeug (6) vorgesehen wird, **dadurch gekennzeichnet, dass** das Führungswerkzeug (6) derart ausgestaltet und am Bohrer (3) angeordnet wird, dass das Führungswerkzeug (6) in der Hilfsbohrung (7) entlang der Hilfsbohrachse (71) exzentrisch in Bezug auf die Hilfsbohrachse geführt wird, so dass die Parallelbohrung (4) derart in das Werkstück (5) eingebracht wird, dass sich die Bohrachse (41) der Parallelbohrung (4) im wesentlichen parallel zur Hilfsbohrachse (71) erstreckt.

10. Verfahren nach Anspruch 9, wobei die Parallelbohrung (4) derart in das Werkstück (5) eingebracht wird, dass eine Querschnittsfläche (401) der Parallelbohrung (4) teilweise mit einer Querschnittsfläche (701) der Hilfsbohrung (7) überschneidet.

11. Verfahren nach einem der Ansprüche 9 oder 10, wobei ein Durchmesser der Parallelbohrung (4) in einem dritten Verfahrensschritt in einem weiteren Bohrvorgang vergrössert wird.

12. Verfahren nach einem der Ansprüche 9 bis 11, wobei mehr als eine Parallelbohrung (4) in das Werkstück (5) eingebracht wird.

## Claims

1. A deep-hole drilling tool including a drill (3) drivable by a drive (2) and having a boring bar (31) and a boring head (32) for the drilling of a parallel bore (4) in a workpiece (5) along a drilling axis (41), with a guide tool (6) being provided for the guidance of the drill (3), **characterised in that** the guide tool (6) is realised and arranged at the drill (3) such that the guide tool (6) is guided, eccentrically with respect to an auxiliary drilling axis (71), in an auxiliary bore (7) which extends along the auxiliary drilling axis (71) such that the parallel bore (4) can be introduced into the workpiece (5) such that the drilling axis (41) of the parallel bore (4) extends substantially parallel to the auxiliary drilling axis (71).

2. A deep-hole drilling tool in accordance with claim 1, wherein the guide tool (6) includes a connection segment (61) for the connection of the guide tool (6) to the drill (3) and a guide segment (62) having an eccentric axis (622) for the eccentric guidance along the auxiliary drilling axis (71) in the auxiliary bore (7).

3. A deep-hole drilling tool in accordance with claim 2, wherein the connection segment (61) includes a leadthrough (63), in particular a cylindrical leadthrough (63), for the reception of the boring bar (31) such that the boring bar (31) can be supported rotatably about a drilling axis (311) of the boring bar (31) in the leadthrough (63).

4. A deep-hole drilling tool in accordance with claim 2 or claim 3, wherein the guide segment (62) is realised such that the eccentric axis (622) of the guide element (62) extends parallel to the auxiliary drilling axis (71) at a pre-determined spacing (a) in the operating state.

5. A deep-hole drilling tool in accordance with any one of the claims 2 to 4, wherein the guide segment (62) has an extended section in the form of a guide section (623) which extends in the axial direction beyond an end surface (611) of the connection segment (61).

6. A deep-hole drilling tool in accordance with any one of the claims 2 to 5, wherein the guide segment (62) and/or the guide section (623) has a kidney-shaped cross-sectional surface perpendicular to the eccentric axis (622).

7. A deep-hole drilling tool in accordance with any one of the preceding claims, wherein the guide tool (6) is realised and arranged at the drill (3) such that the guide tool (6) is guided in the auxiliary bore (7) and in the parallel bore (4).

8. A deep-hole drilling tool in accordance with any one of the preceding claims, wherein a guide element (8), in particular a guide rod (8), is provided in the auxiliary bore (7) for the guidance of the guide tool (6).

9. A method for drilling with a deep-hole drilling tool (1) including a drill (3) driven by a drive (2) and having a boring bar (31) and a boring head (32), wherein, in a first method step, an auxiliary bore (7) is introduced into a workpiece (5) by the drill (3) concentrically to and along an auxiliary drilling axis (71) and, in a second method step, a guide tool (6) is provided for the concentric drilling of a parallel bore (4) in the workpiece (5) along a drilling axis (41) and for the guidance of the drill (3), **characterised in that** the guide tool (6) is realised and arranged at the drill (3) such that the guide tool (6) is guided eccentrically in the auxiliary bore (7) along the auxiliary drilling axis (71) so that the parallel bore (4) is introduced into the workpiece (5) such that the drilling axis (41) of the parallel bore (4) extends substantially parallel to the auxiliary drilling axis (71).

10. A method in accordance with claim 9, wherein the parallel bore (4) is introduced into the workpiece (5) such that a cross-sectional surface (401) of the parallel bore (4) partly overlaps a cross-sectional surface (701) of the auxiliary bore (7).

11. A method in accordance with any one of the claims 9 or 10, wherein a diameter of the parallel bore (4) is enlarged in a further drilling process in a third method step.

12. A method in accordance with any one of the claims 9 to 11, wherein more than one parallel bore (4) is introduced into the workpiece (5).

## Revendications

1. Foret pour trous profonds, comprenant un foret (3) apte à être entraîné par un entraînement (2) avec une tige de forage (31) et une tête de forage (32) pour forer un trou de forage parallèle (4) dans une pièce (5) le long d'un axe de forage (41), où est prévu pour le guidage du foret (3) un outil de guidage (6), **caractérisé en ce que** l'outil de guidage (6) est configuré et disposé au foret (3) de telle sorte que l'outil de guidage (6) est guidé dans perçage auxiliaire (7) qui s'étend le long d'un axe de perçage auxiliaire (71), d'une manière excentrique relativement à l'axe de perçage auxiliaire, de sorte que le perçage parallèle (4) peut être ménagé de telle sorte dans la pièce (5) que l'axe de forage (41) du perçage parallèle (4) s'étend sensiblement parallèlement à l'axe de perçage auxiliaire (71).

2. Foret pour trous profonds selon la revendication 1, où l'outil de guidage (6) comprend un segment de liaison (61) pour relier l'outil de guidage (6) au foret (3) et un segment de guidage (62) avec un axe excentrique (622) pour le guidage excentrique le long de l'axe de perçage auxiliaire (71) dans le perçage auxiliaire (7).

3. Foret pour trous profonds selon la revendication 2, où le segment de liaison (61) comprend un passage (63), en particulier un passage cylindrique (63) pour la réception de la tige de forage (31) de sorte que la tige de forage (31) peut être logée dans le passage (63) d'une manière tournante autour d'un axe de foret (311) de la tige de forage (31).

4. Foret pour trous profonds selon la revendication 2 ou 3, où le segment de guidage (62) est réalisé de telle sorte qu'à l'état de fonctionnement, l'axe excentrique (622) de l'élément de guidage (62) s'étend parallèlement à l'axe de perçage auxiliaire (71) à un écart donné (a).

5. Foret pour trous profonds selon l'une des revendications 2 à 4, où le segment de guidage (62) présente un élargissement sous la forme d'une section de guidage (623), qui s'étend dans la direction axiale au-delà d'une face d'extrémité (611) du segment de liaison (61).

6. Foret pour trous profonds selon l'une des revendications 2 à 5, où le segment de guidage (62) et/ou la section de guidage (623) présente perpendiculairement à l'axe excentrique (622) une face en section transversale réniforme.

7. Foret pour trous profonds selon l'une des revendications précédentes, où l'outil de guidage (6) est réalisé et disposé de telle sorte au foret (3) que l'outil de guidage (6) est guidé dans le perçage auxiliaire (7) et dans le perçage parallèle (4).

8. Foret pour trous profonds selon l'une des revendications précédentes, où est prévu dans le perçage auxiliaire (7) pour le guidage de l'outil de guidage (6) un élément de guidage (8), en particulier une tige de guidage (8).

9. Procédé de forage avec un foret pour trous profonds (1), comprenant un foret (3) entraîné par un entraînement (2) avec une tige de forage (31) et une tête de forage (32), où lors d'une première étape de procédé, avec le foret (3), un perçage auxiliaire (7) est ménagé concentriquement à et le long d'un axe de perçage auxiliaire (71) dans une pièce (5) et, lors d'une deuxième étape de procédé, pour le forage concentrique d'un perçage parallèle (4) dans la pièce (5) le long d'un axe de forage (41) et pour le guidage du foret (3), un outil de guidage (6) est prévu, **caractérisé en ce que** l'outil de guidage (6) est réalisé et disposé de telle sorte au foret (3) que l'outil de guidage (6) est guidé dans le perçage auxiliaire (7) le long de l'axe de perçage auxiliaire (71) d'une manière excentrique relativement à l'axe de perçage auxiliaire, de sorte que le perçage parallèle (4) est ménagé de telle sorte dans la pièce (5) que l'axe de forage (41) du perçage parallèle (4) s'étend sensiblement parallèlement à l'axe de perçage auxiliaire (71).

10. Procédé selon la revendication 9, où le perçage parallèle (4) est ménagé de telle sorte dans la pièce (5) qu'une face en section transversale (401) du perçage parallèle (4) se chevauche partiellement avec une face en section transversale (701) du perçage auxiliaire (7).

11. Procédé selon l'une des revendications 9 ou 10, où un diamètre du perçage parallèle (4), lors d'une troisième étape de procédé, est agrandi lors d'une opération de forage suivante.

12. Procédé selon l'une des revendications 9 à 11, où plus d'un perçage parallèle (4) est ménagé dans la pièce (5).
